(19) Europäisches Patentamt
European Patent Office
Office européen des brevets

(11) **EP 3 352 021 B1**

(12) **EUROPEAN PATENT SPECIFICATION**

(45) Date of publication and mention
of the grant of the patent:
**20.11.2019 Bulletin 2019/47**

(21) Application number: **17208784.3**

(22) Date of filing: **20.12.2017**

(51) Int Cl.:
*G03G 15/00* *(2006.01)*    *B65H 37/04* *(2006.01)*
*B26D 1/01* *(2006.01)*    *B65H 31/20* *(2006.01)*
*B65H 31/34* *(2006.01)*    *B65H 7/02* *(2006.01)*
*B65H 7/08* *(2006.01)*    *B65H 7/14* *(2006.01)*
*B65H 7/20* *(2006.01)*    *B65H 9/00* *(2006.01)*
*B65H 9/10* *(2006.01)*

(54) **SHEET PROCESSING SYSTEM AND CONTROL METHOD**

BLATTVERARBEITUNGSSYSTEM UND STEUERUNGSVERFAHREN

SYSTÈME DE TRAITEMENT DE FEUILLES ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2017 US 201715408548**

(43) Date of publication of application:
**25.07.2018 Bulletin 2018/30**

(73) Proprietors:
• **KABUSHIKI KAISHA TOSHIBA**
**Minato-ku**
**Tokyo**
**105-8001 (JP)**
• **Toshiba TEC Kabushiki Kaisha**
**Tokyo 141-8562 (JP)**

(72) Inventor: **HASHIMOTO, Yoshihisa**
**Shinagawa-ku,, Tokyo 141-8562 (JP)**

(74) Representative: **Fédit-Loriot**
**38, avenue Hoche**
**75008 Paris (FR)**

(56) References cited:
**US-A1- 2006 197 038    US-A1- 2009 243 201
US-A1- 2010 007 074    US-A1- 2010 007 084
US-A1- 2015 183 605**

**Description**

FIELD

Embodiments described herein relate generally to a sheet processing system and a sheet processing control method.

BACKGROUND

A sheet processing system may be provided with a post-processing apparatus which carries out a post processing on a sheet on which an image is formed. The post-processing apparatus carries out, for example, a processing for punching a hole on a sheet, or a processing for binding sheets with a stapler. In the post processing apparatus, there is a device, like the stapler, which carries out a processing on a plurality of sheets. In order to carry out such a post processing on the plurality of sheets, a standby tray temporarily keeps the plurality of the sheets at a standby position.

A size (for example, A size, B size and the like) of the waiting sheet is provided to the standby tray. The standby tray adjusts positions of supports for supporting the sheet from sides based on the size provided.

In this manner, the standby tray adjusts the positions of the supports according to the size. However, when the sheet is conveyed the standby tray, a skew may be generated. Further, there are times when an incorrect size is detected, and the incorrect size is provided to the standby tray.

In a case in which the skew is generated or the size is incorrectly detected, a paper jam may occur.

US 2015/0183605 discloses a sheet processing apparatus comprising a shift unit configured to shift the sheet based on the detected position of a lateral edge of the sheet and the detected skew of the sheet.

US 2009/0243201 discloses a paper transportation device for accurately detecting an obliquely transported condition of a sheet of paper.

US 2010/0007084 discloses a sheet finishing apparatus comprising a skew detection section that detects the skew amount of the leading edge of the sheet and a sensor that detects the leading edge of the sheet.

US 2010/0007074 discloses a sheet finishing apparatus comprising tray members that supports both ends of the sheet in the direction of width and moves in a direction away from each other.

To solve the above-cited problems, there is provided a sheet processing system, comprising: a tray configured to support a sheet on opposite sides of the sheet orthogonal to a conveyance direction of the sheet, the tray including a first adjustable support and second adjustable support positioned opposite the first adjustable support in the direction orthogonal to the conveyance direction of the sheet, the first and second adjustable supports being independently movable in the direction orthogonal to the conveyance direction; a skew sensor configured to detect a skew angle of the sheet conveyed to the tray; a corner sensor configured to detect positions of each corner on a front end in the downstream direction of the sheet conveyed to the tray; and a controller configured to control movement of the first and second adjustable supports based on the detected skew angle and the detected positions of each corner on the front end of the sheet conveyed to the tray so that the sheet is conveyed to the tray without jamming.

The corner sensor is configured to rotate through a predetermined angle in a plane of the sheet.

The controller is further configured to control a rotation of the corner sensor based on the detected skew angle so that the corner sensor is substantially parallel to the front end of the sheet conveyed to the tray when the corner sensor detects the positions of each corner on the front end of the sheet conveyed to the tray.

The controller moves the first adjustable support to a position X in the direction orthogonal to the conveyance direction of the sheet given by

$$X = s \times \cos(A) - L \times \tan(A) - M,$$

and
the controller moves the second adjustable support to a position Y in the direction orthogonal to the conveyance direction of the sheet given by

$$Y = t \times \cos(A) - L \times \tan(A) + M,$$

where s is the detected position of a first corner of the front end of the sheet, t is the detected position of a second corner of the front end of the sheet, A is the detected skew angle, and L and M are predetermined constants.

L is a predetermined constant calculated in advance for expanding an interval between the first and second adjustable supports as A becomes large, and M is a predetermined constant calculated in advance for maintaining a margin between the corners of the front end of the sheet and the corresponding adjustable supports.

The sheet processing system may further comprise: a punch unit configured to carry out punching on a sheet at an upstream side of the tray in the sheet conveying direction. According to the present invention, the skew sensor and the corner sensor are positioned in the punch unit.

The sheet processing system may further comprise: a processing unit configured to perform a post processing on one or more sheets; and a processing tray configured to support the one or more sheets on which the post processing is formed.

According to the present invention, when a number of sheets corresponding to a post processing instruction are stacked on the tray, the first and second adjustable supports are moved away from the sheets stacked on the tray in the direction orthogonal to the conveyance directions so that the sheets are moved to the processing tray in order to carry out the post processing in accordance with the post processing instruction.

The present invention further relates to a sheet processing method, comprising the steps of: conveying a sheet on a conveying path towards a tray configured to support a sheet on opposite sides of the sheet orthogonal to a conveyance direction of the sheet, the tray including a first adjustable support and second adjustable support positioned opposite the first adjustable support in the direction orthogonal to the conveyance direction of the sheet, the first and second adjustable supports being independently movable; detecting a skew angle of the sheet conveyed towards the tray; detecting positions of each corner on a front end in the downstream direction of the sheet conveyed towards the tray; and controlling movement of the first and second adjustable supports in the direction orthogonal to the conveyance direction based on the detected skew angle and the detected positions of each corner on the front end of the sheet so that the sheet is conveyed to the tray without jamming.

The positions of each corner on the front end of the sheet are detected by a corner sensor configured to rotate through a predetermined angle in a plane of the sheet.

The sheet processing method further comprises the step of:
rotating the corner sensor based on the detected skew angle so that the corner sensor is substantially parallel to the front end of the sheet conveyed to the tray when the corner sensor detects the positions of each corner on the front end of the sheet conveyed to the tray.

The first adjustable support is moved to a position X in the direction orthogonal to the conveyance direction of the sheet given by $X = s \times \cos(A) - L \times \tan(A) - M$, and the second adjustable support is moved to a position Y in the direction orthogonal to the conveyance direction of the sheet given by $Y = t \times \cos(A) - L \times \tan(A) + M$, where s is the detected position of a first corner of the front end of the sheet, t is the detected position of a second corner of the front end of the sheet, A is the detected skew angle, and L and M are predetermined constants.

L is a predetermined constant calculated in advance for expanding an interval between the first and second adjustable supports as A becomes large.

M is a predetermined constant calculated in advance for maintaining a margin between the corners of the front end of the sheet and the corresponding adjustable supports.

The sheet processing method may further comprise the step of: punching the sheet at an upstream side of the tray in the sheet conveying direction with a punch unit, wherein the skew sensor and the corner sensor are positioned in the punch unit.

The sheet processing method may further comprise the step of:
when a number of sheets corresponding to a post processing instruction are stacked on the tray, moving the first and second adjustable supports away from the sheets stacked on the tray in the direction orthogonal to the conveyance directions so that the sheets are moved to a processing tray; supporting the sheets on the processing tray; and while the sheets are supported on the processing tray, performing a post processing in accordance with the post processing instruction on the sheets.

The present invention further relates to a sheet processing system for controlling a standby tray in a post processing apparatus.

The invention is defined by the appended claims.

DESCRIPTION OF THE DRAWINGS

Fig. 1 is a diagram illustrating a schematic configuration of an example sheet processing system according to an embodiment;
Fig. 2 is a block diagram illustrating control systems of an sheet forming apparatus and a sheet processing apparatus;
Fig. 3 is a plan view schematically illustrating a configuration of a punch mechanism;
Fig. 4 is a diagram illustrating a perspective view of a standby tray and a processing tray;

Fig. 5 is a diagram illustrating a plan view of the standby tray and the processing tray;
Figs. 6-9 illustrate detection of a skew angle of a sheet P;
Fig. 10 is a diagram illustrating a method of calculating a skew angle by a skew sensor;
Fig. 11 is a diagram illustrating a method of correcting a detected skew;
Fig. 12 is a diagram illustrating an example of a sequence of operations by a control unit.

DETAILED DESCRIPTION

A sheet processing system according to an embodiment includes a tray that supports a sheet on opposite sides of the sheet orthogonal to a conveyance direction of the sheet. The tray includes a first adjustable support and second adjustable support positioned opposite the first adjustable support in the direction orthogonal to the conveyance direction of the sheet. The first and second adjustable supports are independently movable in the direction orthogonal to the conveyance direction. A skew sensor detects a skew angle of the sheet conveyed to the tray. A corner sensor detects positions of each corner on a front end in the downstream direction of the sheet conveyed to the tray. A controller controls movement of the first and second adjustable supports based on the detected skew angle and the detected positions of each corner on the front end of the sheet conveyed to the tray so that the sheet is conveyed to the tray without jamming.

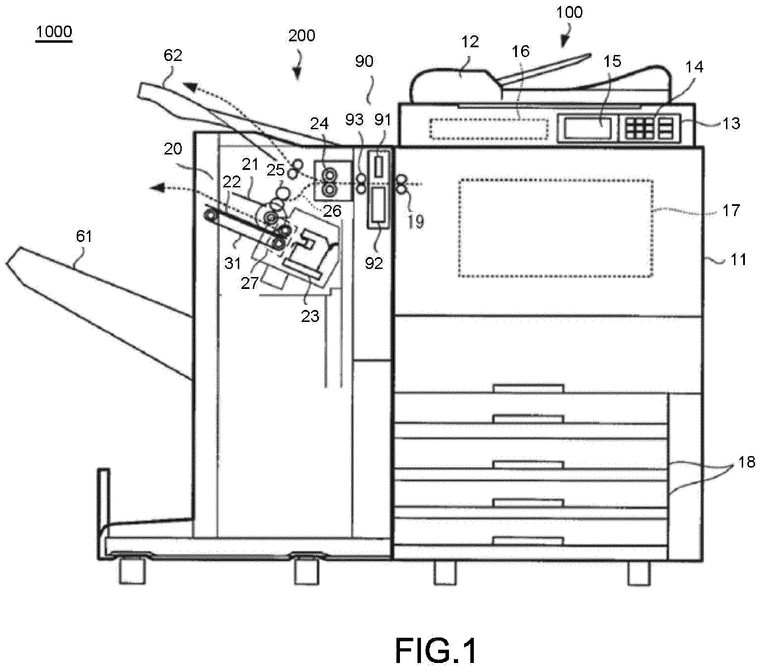

Fig. 1 is a diagram illustrating a schematic configuration of an example sheet processing system 1000 according to the present embodiment. The sheet processing system 1000 includes an image forming apparatus 100 and a sheet processing apparatus 200.

The image forming apparatus 100 is an MFP (Multi-Function Peripheral), a printer or a copier. The sheet processing apparatus 200 is adjacent to the image forming apparatus 100.

A sheet on which an image is formed by the image forming apparatus 100 is conveyed to the sheet processing apparatus 200. The sheet processing apparatus 200 carries out a post processing on the sheet supplied from the image forming apparatus 100. The post processing is, for example, a sorting processing and/or a stapling processing. As necessary, the post processing may include a processing for folding a sheet in two after carrying out saddle stitching on the sheet and discharging the folded sheet.

In the sheet processing system 1000 shown in Fig. 1, a punch mechanism 90 is positioned between the image forming apparatus 100 and the sheet processing apparatus 200. The punch mechanism 90 is a type of sheet processing apparatus.

In Fig. 1, a document table (not shown) is positioned at the upper part of a main body 11 of the image forming apparatus 100, and an ADF (Auto Document Feeder) 12 is positioned on the document table in an openable manner. Furthermore, an operation panel 13 is positioned at the upper part of the main body 11. The operation panel 13 includes an operation unit 14 including various keys and a touch-panel type display unit 15.

The main body 11 includes a scanner unit 16 and a printer unit 17. Furthermore, a plurality of cassettes 18 in which sheets with various sizes are housed is positioned at the lower part of the main body 11. The scanner unit 16 reads a document sent from the ADF 12 or a document placed on the document table.

The printer unit 17 includes a photoconductive drum and a laser. The printer unit 17 scans the surface of the photoconductive drum through a laser beam from the laser to expose the surface, and creates an electrostatic latent image on the photoconductive drum.

A charger, a developing device, a transfer device and the like (not shown) are positioned in the vicinity of the photoconductive drum. The electrostatic latent image of the photoconductive drum is developed by the developing device, and a toner image is formed on the photoconductive drum. The toner image is transferred onto the sheet by the transfer device, and further fixed on the sheet by a fixing device. The configuration of the printer unit 17 is not limited to the foregoing example, and the printer unit 17 may be implemented as other various forms.

The sheet processing apparatus 200 includes a staple mechanism 20 for carrying out the stapling processing on a sheet bundle. Further, a saddle unit for carrying out the saddle stitching and folding processing of the sheet is also included in the sheet processing apparatus 200.

The punch mechanism 90 is positioned between the main body 11 and the sheet processing apparatus 200. The punch mechanism 90 includes a punch mechanism 91 and a dust box 92. Further, the punch mechanism 90 includes a corner sensor and a skew sensor which are described later. Rollers 19 and 93 for sheet conveyance are positioned on a path from the main body 11 to the sheet processing apparatus 200.

The sheet discharged from the main body 11 is conveyed to the sheet processing apparatus 200 via the rollers 19 and 93. Punching (perforation) by the punch mechanism 91 is executed when a user operates the operation panel 13 and sets a mode to a punch mode.

The sheet processing apparatus 200 includes a standby tray 21, a processing tray 22, and a stapler 23. Further, the sheet processing apparatus 200 includes a discharge tray 61 and a fixing tray 62. The discharge tray 61 may be configured to ascend and descend. A sheet P discharged by the discharge roller 19 of the image forming apparatus 100 is received by an inlet roller 24 positioned in the vicinity of a carry-in port of the sheet processing apparatus 200. The inlet roller 24 is composed of an upper roller and a lower roller.

A sheet feed roller 25 is positioned at the downstream side of the inlet roller 24. The sheet P received by the inlet roller 24 is sent to the standby tray 21 via the sheet feed roller 25. The sheet feed roller 25 is composed of an upper roller and a lower roller. A conveyance path 26 for guiding the sheet P to the sheet feed roller 25 is positioned between the inlet roller 24 and the standby tray 21. The processing tray 22 for stacking the sheet P which falls from the standby tray 21 is arranged below the standby tray 21.

A plurality of sheets may be stacked on the standby tray 21 in order to carry out the post processing on the sheets. Further, the standby tray 21 is an openable structure, and is opened if a number of the sheets P are stacked thereon, the number being input in the operation unit 14 in connection with the instruction for the post processing. The sheet P falls to the processing tray 22 through its own weight or an operation of a fall assistance member which pushes the sheet P through the opened structure. The processing tray 22 for carrying out the post processing aligns and supports the sheets P while the sheets P are stapled by the stapler 23. The stapler is an example of a post processing unit.

The sheet falling to the processing tray 22 is guided to the stapler 23 through a roller 27. The stapler 23 then carries out the stapling processing. The roller 27 is composed of an upper roller and a lower roller. With respect to the stapling processing on the sheets, the plurality of the sheets P falling from the standby tray 21 to the processing tray 22 is stapled after being aligned in the longitudinal direction parallel to the conveyance direction and aligned in the lateral direction orthogonal to the conveyance direction. A conveyance belt 31 is driven rotationally, and cyclically moves rotationally between the stapler 23 and the discharge port along the discharge direction of the sheet.

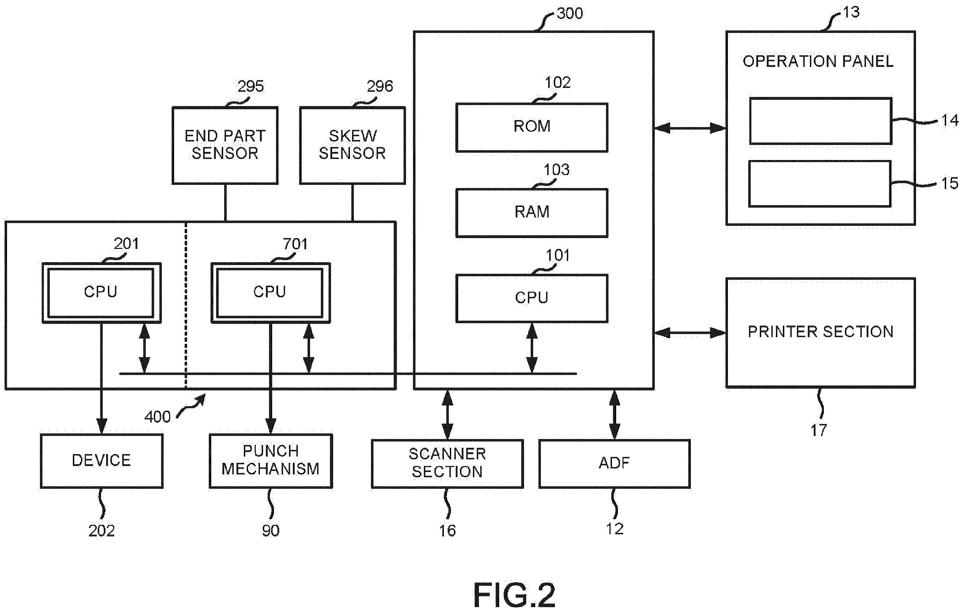

Fig. 2 is a block diagram illustrating control systems of the image forming apparatus 100 and the sheet processing apparatus 200.

In Fig. 2, a main control unit 300 includes a CPU (Central Processing Unit) 101, a ROM (Read Only Memory) 102 and a RAM (Random Access Memory) 103. The main control unit 300 controls the image forming apparatus 100 according to a control program stored in the ROM 102. The main control unit 300 controls operations of the ADF 12, the scanner unit 16 and the printer unit 17 in response to operations from the operation panel 13. The RAM 103 temporarily stores control data or is used in an arithmetic job at the time of the control.

The operation panel 13 includes the operation unit 14, which includes the plurality of the keys, and the display unit, 15 which also serves as a touch panel. The operation panel 13 can receive various instructions for image formation. For example, an instruction of the copy number and an operation of manual stapling may be input by using the operation unit 14. Further, a sheet size, a sheet type, an instruction for the stapling and an instruction for the sheet folding are input by operating the touch panel of the display unit 15.

Further, the sheet processing apparatus 200 includes a control unit 400 which controls the sheet processing apparatus 200. The control unit 400 controls the operations of the staple mechanism 20 and the punch mechanism 90 of the sheet processing apparatus 200. Further, the control unit 400 controls each device in the sheet processing apparatus 200.

The control unit 400 is connected to an corner sensor 295 and a skew sensor 296. The corner sensor 295 detects positions of both corners of a front end at the downstream side of the sheet P. The skew sensor 296 detects a skew angle of the sheet P.

The control unit 400 includes a first control unit 201 including a CPU and a second control unit 701 including a CPU. The CPUs of the first and second control units 201 and 701 are connected with the CPU 101 of the main control unit 300 via a bus line and carry out transmission of information between the main control unit 300 and the control unit 400, and the image forming apparatus 100 and the sheet processing apparatus 200 cooperate to operate. Alternatively, the first control unit 201 and second control unit 701 may be implemented in a single CPU corresponding to control unit 400 programmed to execute the various functions.

The first control unit 201 controls each device 202 of the staple mechanism 20, and the second control unit 701 controls the punch mechanism 90. Controlling the staple mechanism 20 includes performing of the stapling by the stapler 23, conveying the sheet P to the stapler 23, and discharging the stapled sheet.

Controlling the punch mechanism 90 includes ensuring that the punching is carried out at a proper position on the basis of the skew angle detected by the skew sensor 296 and the positions detected by the corner sensor 295.

The device 202 includes the standby tray 21, the processing tray 22, the stapler 23 and the conveyance belt 31.

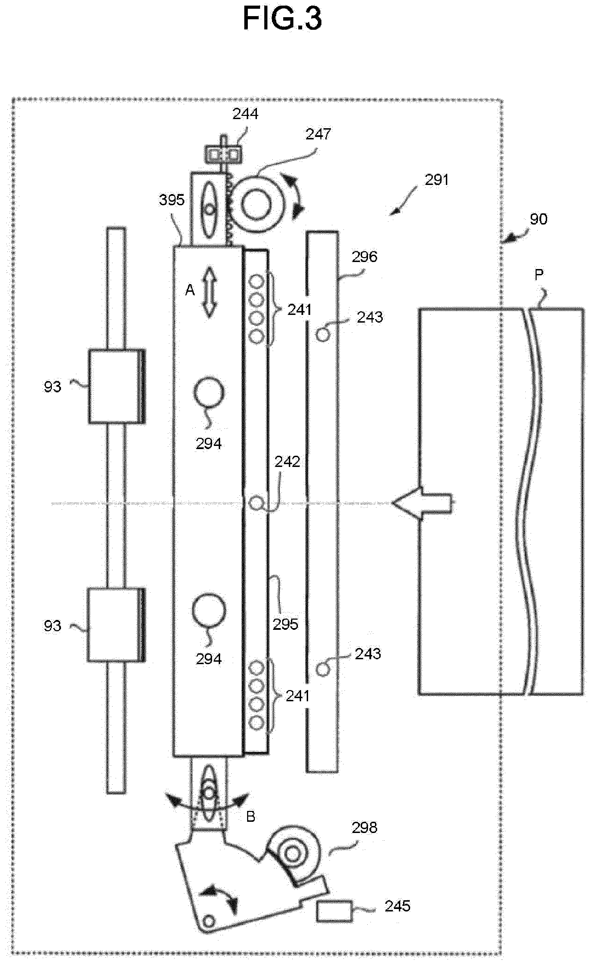

Fig. 3 is a plan view schematically illustrating the configuration of the punch mechanism 90. The punch mechanism 90 is positioned between the image forming apparatus 100 and the staple mechanism 20, and includes the punch mechanism 91 and the dust box 92 (refer to Fig. 2). The punch mechanism 90 includes the roller 93 for sheet conveyance.

The punch mechanism 291 includes a hole punching unit 395 with a punching blade 294 which carries out the punching on the sheet P. When the punching blade 294 is descended, a punched hole is made in the sheet P. Further, punch scrap generated by the punching drops into the dust box 92. The punching blade 294 is driven through rotation of a punch motor (not shown). The punching by the punch mechanism 291 is executed when the user operates the operation panel 13 and sets a mode to the punch mode.

The hole punching unit 395 may move in an arrow A direction (lateral direction) orthogonal to the conveyance direction of the sheet P. One end (lower end in the figure) of the hole punching unit 395 may rotate through a maximum predetermined angle in an arrow B direction.

The punch mechanism 291 includes a moving mechanism 297 for moving the hole punching unit 395 in the lateral direction (arrow A direction), and an attitude control unit 298 for rotating the hole punching unit 395 in the arrow B direction to control the attitude.

The corner sensor 295 includes sensors 241 and 242. The sensors 241 detect the positions of both sides of the front end of the sheet P. The sensor 242 detects the front end and the rear end of the sheet P. The sensors 241 each include a plurality of sensors. The positions of both sides can be detected through the positions of the sensors which detects the sheet P among the plurality of the sensors. For example, the sheet P may be detected by two sensors of the inside of the sensors 241 shown in Fig. 3. In this case, the positions of the sensors outside of the detecting sensors which detect the sheet P are set as the positions of the sides of the sheet P. Thus, in a case in which the sheet P is rotated relative to the corner sensor 295 due to the skew, it is necessary to correct the detected position.

The skew sensor 296 includes sensors 243. The skew sensor 296 detects the skew angle with the two sensors 243.

The hole punching unit 395 moves in the arrow A direction in response to the positions of both sides of the front end at the downstream side of the sheet P detected by the corner sensor 295. The hole punching unit 395 is rotated and inclined in the arrow B direction to correspond to the skew angle of the skewed sheet P detected by the skew sensor 296.

The punch mechanism 90 includes a sensor 244 for detecting a home position of the hole punching unit 395 in the lateral direction (A direction). The punch mechanism 90 includes a sensor 245 for detecting a home position of the hole punching unit 395 in the longitudinal direction (B direction).

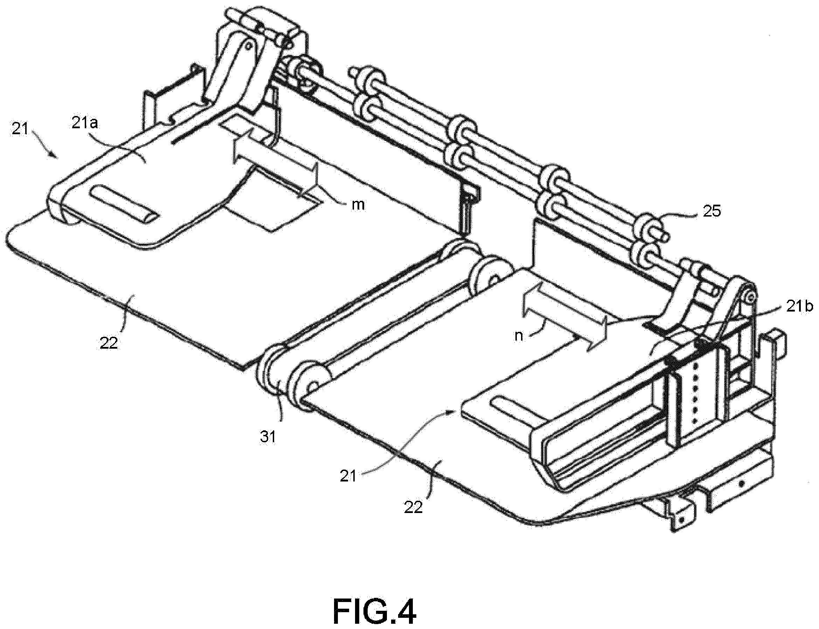

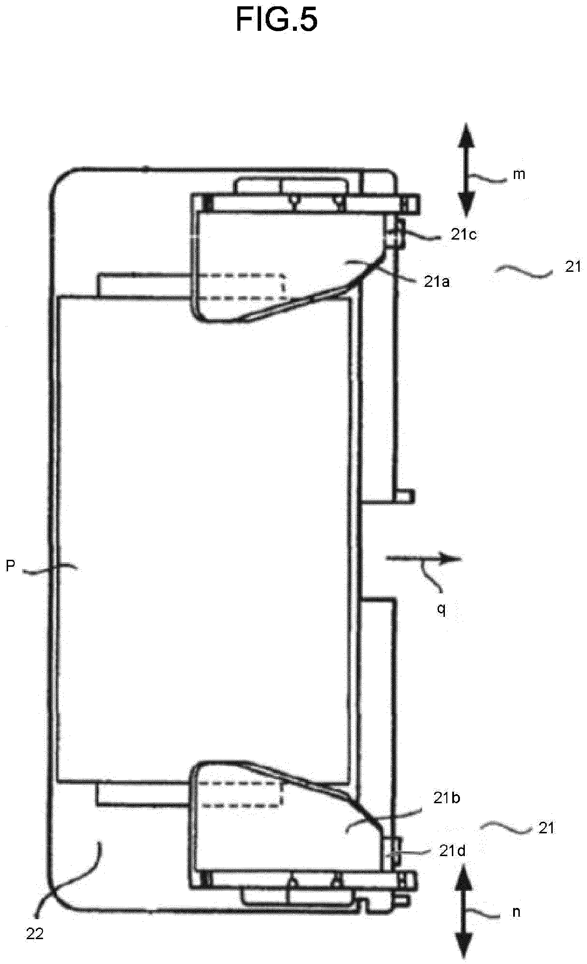

Fig. 4 and Fig. 5 are diagrams illustrating the standby tray 21 and the processing tray 22. As shown in Fig. 4, the standby tray 21 includes a pair of tray members 21a and 21b. The tray members 21a and 21b support both sides of the sheet P. As shown in Fig. 5, stoppers 21c and 21d for regulating the rear end of the sheet P are arranged in the tray members 21a and 21b.

The tray member 21a movably slides in an arrow m direction. The tray member 21b movably slides in an n direction. The slide amount of the tray members 21a and 21b is controlled by the first control unit 201.

In a case in which an interval between the tray members 21a and 21b is smaller than a width of the conveyed sheet P, paper jam is generated.

Therefore, the skew angle detected by the skew sensor 296 and the positions detected by the corner sensor 295 are provided from the second control unit 701 to the first control unit 201.

Then, the first control unit 201 adjusts the positions of the tray members 21a and 21b on the basis of the skew angle detected by the skew sensor 296 and the positions detected by the corner sensor 295.

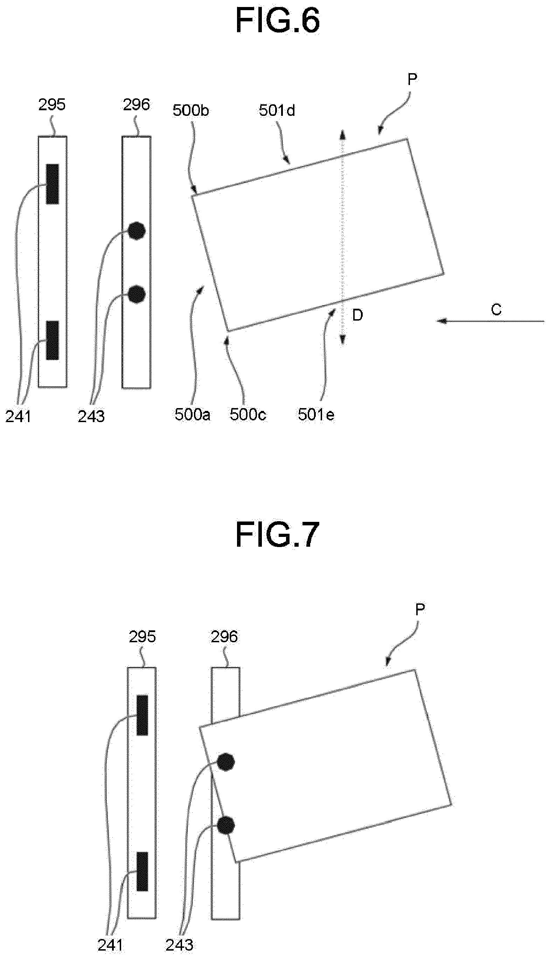

Fig. 6 to Fig. 9 are diagrams illustrating detection of the skew angle of the sheet P. In Fig. 6, the corner sensor 295, the skew sensor 296 and the sheet P are shown.

In Fig. 6 to Fig. 9, the sheet P is conveyed in an arrow C direction. An arrow D indicates a direction orthogonal to the conveyance direction of the sheet P. If the sheet P is conveyed to the standby tray 21, the support member 21a supports a side 501 d of the sheet P, and the support member 21b supports a side 501e of the sheet P.

The corner sensor 295 detects both corners 500b and 500c of a front end 500a at the downstream side of the sheet P. In Fig. 7 to Fig. 9 described below, signs indicating the front end 500a, both front corners 500b and 500c, and the sides 501d and 501e are omitted.

Fig. 7 is a diagram illustrating a state in which the skew angle is detected by the skew sensor 296. The skew sensor 296 starts count of a pulse when the sheet P is detected by one of the two sensors 243. The pulse refers to a pulse output from an encoder of a stepping motor for conveying the sheet P.

The skew sensor 296 stops the count of the pulse when the sheet P is detected by the other one of the two sensors 243 after the count of the pulse is started. The pulse is in proportion to a conveyance distance of the sheet P, and thus the conveyance distance is calculated according to the counted pulse. The skew sensor 296 calculates the skew angle according to the calculated conveyance distance. A calculation method of the skew angle is described later.

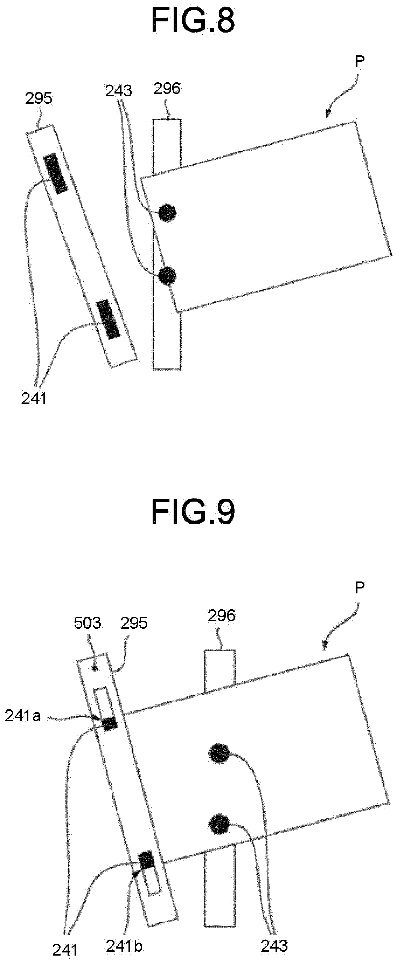

Fig. 8 is a diagram illustrating the corner sensor 295 which is rotated with the skew angle detected. As described in connection with Fig. 3, in a case in which the sheet P is skewed, the hole punching unit 395 is also rotated matching the skew angle.

Fig. 9 is a diagram illustrating a state in which both corners 500b and 500c are detected by the corner sensor 29. In Fig. 9, in the corner sensor 295, areas where the sheet P is detected are indicated in black, and areas where the sheet P is not detected are indicated in white. Thus, positions 241 and 241b are detected positions of both corners. The corner sensor 295 is rotated matching the skew angle around a rotational axis 503. Thus, it is necessary to correct the positions of the detected corners. This correction method is described later. It is possible that a distance between the rotational axis 503 and the plurality of the sensors of the corner sensor 295 is calculated by the corner sensor 295. In other words, it is possible to calculate distances between the rotational axis 503.

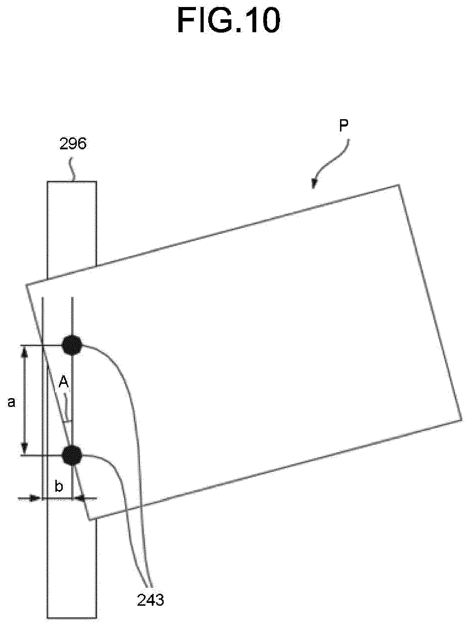

Fig. 10 is a diagram illustrating the calculation method of the skew angle using the skew sensor 296. As stated above, the conveyance distance is calculated according to the counted pulse. Thus, a distance b shown in Fig. 10 is calculated according to the pulse. Further, a distance a shown in Fig. 10 is a distance between the two sensors 243, and thus is already known. Therefore, the skew angle A is arctan (b/a).

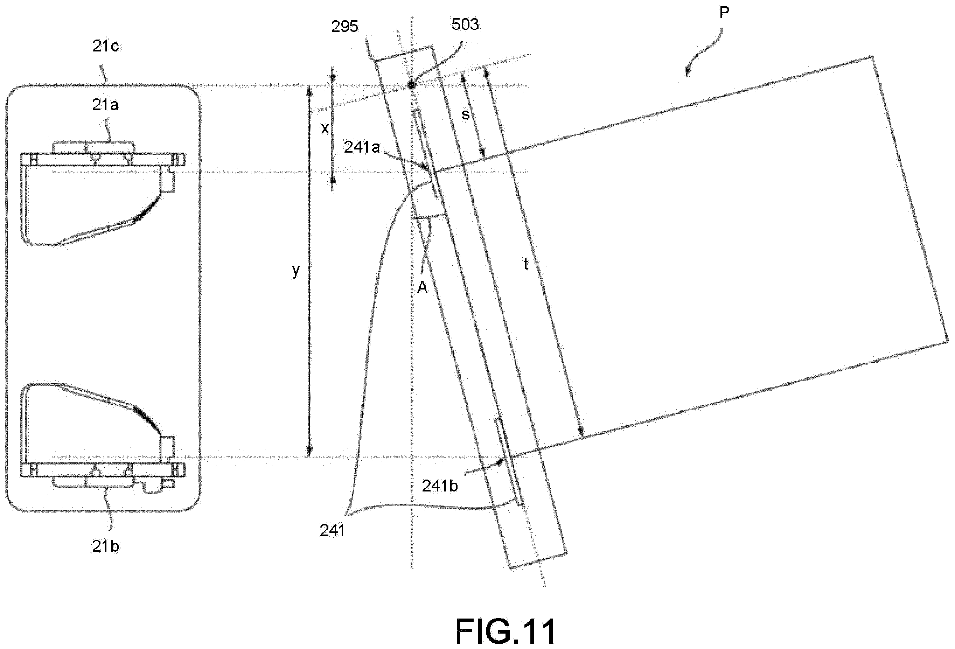

Fig. 11 is a diagram illustrating the method of correcting the positions detected by the corner sensor 295. In Fig. 11, the corner sensor 295 is rotated around the rotational axis 503 at only the skew angle A detected by the skew sensor 296. Then, the corners 241a and 241b are set as the positions of both corners detected by the corner sensor 295.

A distance between the position 241a and the rotational axis 503 is set to s, and a distance between the position 241b and the rotational axis 503 is set to t. Further, a distance from the rotational axis 503 for correcting the distance s is set to x, and a distance from the rotational axis 503 for correcting the distance t is set to y.

At this time, the corrected distance x becomes s × cos (A) and the corrected distance y becomes t × cos (A) according to the cosine to the skew angle A. However, if the support members 21a and 21b slide to the positions of these s × cos (A) and t × cos (A), there is no margin between the support members 21a and 21b and the sheet P. Therefore, in order to hold some margin, the first control unit 201 adjusts the position X of the support member 21a to x-α and the position Y of the support member 21b to y+β by using constants α and β (α>0 and β>0).

In this manner, it is possible for the standby tray 21 to hold both ends of the sheet by adjusting the positions of the support members 21a and 21b, and thus the generation of the paper jam can be suppressed.

Further, in a case in which the skew is generated, even if it is possible for the standby tray 21 to hold both ends of the sheet, as the sheet P advances slantingly, there is a high possibility that the paper jam is generated. Thus, the constants α and β may be changed depending on the skew angle. For example, the following formula may be obtained by using constants L and M: α = L × tan (A) + M, and β = L × tan (A) + M. The constant L is a coefficient for sliding the tray members 21a and 21b in the directions of the outside of the arrows m and n according to the skew angle. More specifically, the constant L is a coefficient for expanding the interval between the tray members 21a and 21b as the skew angle becomes large. The constant M is a margin maintained between the corners of the sheet P and the support member. The constants L and M are changed according to the structure of the standby tray 21, the conveyance speed of the sheet, the thickness of the sheet and the like. Thus, the first control unit 201 may hold the suitable constants L and M obtained through various experiments in advance.

Through the above, the first control unit 201 adjusts the positions at which the support members 21a and 21b support the sheet through the following processing if receiving the skew angle A and the positions s and t of both ends from the second control unit 701. In other words, the first control unit 201 calculates the position X of the support member 21a and the position Y of the support member 21b by using the following formula.

$$X = s \times \cos (A) - L \times \tan (A) - M \quad \text{(formula 1)}$$

$$Y = t \times \cos (A) + L \times \tan (A) + M \text{ (formula 2)}$$

The first control unit 201 slides the support member 21a to the calculated position X and slides the support member 21b to the position Y. Formulas 1 and 2 are also applied to a case in which the skew is not generated, that is, a case in which A is 0. In fact, if "A=0" is substituted to the foregoing formula, the following formulas are obtained: X = s - M, and Y = t + M, and suitable values are calculated.

Thus, the first control unit 201 may substitute the skew angle A and the positions s and t of both ends to the foregoing formula without determining whether or not the sheet is skewed.

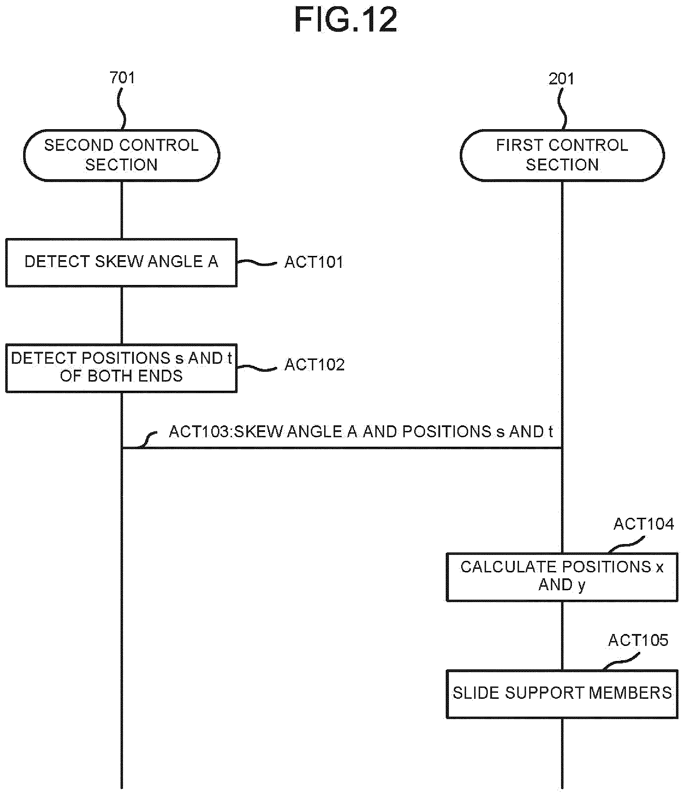

Fig. 12 is a diagram illustrating an example sequence of operations by the first and second control units 201 and 701, of the control unit 400. The second control unit 701 detects the skew angle A with the skew sensor 296 (ACT 101). The second control unit 701 detects the positions s and t of both corners with the corner sensor 295 (ACT 102). The second control unit 701 provides the skew angle A and the positions s and t of both ends to the first control unit 201 (ACT 103).

The first control unit 201 uses the provided skew angle A and the provided positions s and t of both ends to the formula 1 to calculate the positions X and Y (ACT 104). The first control unit 201 slides the support member 21a to the calculated position X, and slides the support member 21b to the position Y (ACT 105).

Further, in the formula 1, "L × tan (A)" is also used to calculate either of X and Y; however, the present invention is not limited to this.

For example, in Fig. 11, the sheet P is shifted towards the left side when viewed from the standby tray 21. On the other hand, the sheet P is not shifted towards the right side. Thus, the slide amount of the tray member may be calculated by using "L × tan (A)" is calculated only in a case in which the position at which the tray member corresponding to the side to which the sheet P is shifted supports the sheet P. For example, in the example in Fig. 11, the slide amount of the tray member 21a towards the left side direction (direction of the outside) is calculated by using "L × tan (A)".

According to the present embodiment described above, the occurrence of the paper jam can be suppressed by adjusting the positions at which the tray members support the sheet on the basis of the skew angle and the positions of the detected corners.

While certain embodiments have been described, these embodiments have been presented by way of example only, and are not intended to limit the scope of the invention. Indeed, the novel embodiments described herein may be embodied in a variety of other forms, as long as these forms fall within the scope of the appended claims.

## Claims

1. A sheet processing system (200), comprising:

   a tray (21) configured to support a sheet on opposite sides of the sheet orthogonal to a conveyance direction of the sheet, the tray including a first adjustable support (21a) and second adjustable support (21b) positioned opposite the first adjustable support in the direction orthogonal to the conveyance direction of the sheet, the first and second adjustable supports being independently movable in the direction orthogonal to the conveyance direction;
   a skew sensor (296) configured to detect a skew angle of the sheet conveyed to the tray;
   a corner sensor (295) configured to detect positions of each corner on a front end in the downstream direction of the sheet conveyed to the tray; and
   a controller (400) configured to control movement of the first and second adjustable supports based on the detected skew angle and the detected positions of each corner on the front end of the sheet conveyed to the tray so that the sheet is conveyed to the tray without jamming; wherein
   the corner sensor is configured to rotate through a predetermined angle in a plane of the sheet;
   the controller is further configured to:

   control a rotation of the corner sensor based on the detected skew angle so that the corner sensor is parallel to the front end of the sheet conveyed to the tray when the corner sensor detects the positions of each corner on the front end of the sheet conveyed to the tray and
   move the first adjustable support to a position X in the direction orthogonal to the conveyance direction of the sheet given by

   $$X = s \times \cos (A) - L \times \tan (A) - M,$$

   and
   the controller moves the second adjustable support to a position Y in the direction orthogonal to the conveyance direction of the sheet given by

   $$Y = t \times \cos (A) - L \times \tan (A) + M,$$

   where s is the detected position of a first corner of the front end of the sheet, t is the detected position of a second corner of the front end of the sheet, A is the detected skew angle, L is a predetermined constant calculated in advance for expanding an interval between the first and second adjustable supports as A becomes large, and M is a predetermined constant calculated in advance for maintaining a margin between the corners of the front end of the sheet and the corresponding adjustable supports.

2. The sheet processing system according to claim 1, further comprising:

   a punch unit (90) configured to carry out punching on a sheet at an upstream side of the tray in the sheet conveying direction, wherein
   the skew sensor and the corner sensor are positioned in the punch unit.

3. The sheet processing system according to claim 1 or 2, further comprising:

a processing unit (200) configured to perform a post processing on one or more sheets; and
a processing tray (22) configured to support the one or more sheets on which the post processing is formed, wherein:
when a number of sheets corresponding to a post processing instruction are stacked on the tray, the first and second adjustable supports are moved away from the sheets stacked on the tray in the direction orthogonal to the conveyance directions so that the sheets are moved to the processing tray in order to carry out the post processing in accordance with the post processing instruction.

4. A sheet processing method, comprising the steps of:

conveying a sheet on a conveying path towards a tray (21) configured to support a sheet on opposite sides of the sheet orthogonal to a conveyance direction of the sheet, the tray including a first adjustable support (21a) and second adjustable support (21b) positioned opposite the first adjustable support in the direction orthogonal to the conveyance direction of the sheet, the first and second adjustable supports being independently movable;
detecting a skew angle of the sheet conveyed towards the tray;
detecting positions of each corner on a front end in the downstream direction of the sheet conveyed towards the tray; and
controlling movement of the first and second adjustable supports in the direction orthogonal to the conveyance direction based on the detected skew angle and the detected positions of each corner on the front end of the sheet so that the sheet is conveyed to the tray without jamming; wherein
the positions of each corner on the front end of the sheet are detected by a corner sensor (295) configured to rotate through a predetermined angle in a plane of the sheet;
the method further comprises the step of:
rotating the corner sensor based on the detected skew angle so that the corner sensor is parallel to the front end of the sheet conveyed to the tray when the corner sensor detects the positions of each corner on the front end of the sheet conveyed to the tray;
wherein the first adjustable support is moved to a position X in the direction orthogonal to the conveyance direction of the sheet given by

$$X = s \times \cos{(A)} - L \times \tan{(A)} - M,$$

and
the second adjustable support is moved to a position Y in the direction orthogonal to the conveyance direction of the sheet given by

$$Y = t \times \cos{(A)} - L \times \tan{(A)} + M,$$

where s is the detected position of a first corner of the front end of the sheet, t is the detected position of a second corner of the front end of the sheet, A is the detected skew angle, L is a predetermined constant calculated in advance for expanding an interval between the first and second adjustable supports as A becomes large, and M is a predetermined constant calculated in advance for maintaining a margin between the corners of the front end of the sheet and the corresponding adjustable supports.

5. The sheet processing method according to claim 4, further comprising the step of:

punching the sheet at an upstream side of the tray in the sheet conveying direction with a punch unit (90), wherein the skew sensor and the corner sensor are positioned in the punch unit.

6. The sheet processing method according to claim 4 or 5, further comprising the steps of:
when a number of sheets corresponding to a post processing instruction are stacked on the tray, moving the first and second adjustable supports away from the sheets stacked on the tray in the direction orthogonal to the conveyance directions so that the sheets are moved to a processing tray (22);
supporting the sheets on the processing tray; and
while the sheets are supported on the processing tray, performing a post processing in accordance with the post processing instruction on the sheets.

**Patentansprüche**

1.  Blattverarbeitungssystem (200), umfassend:

    ein Fach (21), das konfiguriert ist, ein Blatt auf gegenüberliegenden Seiten des Blattes orthogonal zu einer Förderrichtung des Blattes zu stützen bzw. zu tragen, wobei das Fach einen ersten einstellbaren Träger (21a) und einen zweiten einstellbaren Träger (21b) enthält, der gegenüberliegend zu dem ersten einstellbaren Träger in der Richtung orthogonal zu der Förderrichtung des Blattes positioniert ist, wobei der erste und der zweite einstellbare Träger unabhängig voneinander in orthogonaler Richtung zur Förderrichtung bewegbar sind;
    einen Schräglaufsensor (296), der konfiguriert ist, einen Schräglaufwinkel des zu dem Fach beförderten Blattes zu erfassen;
    einen Eckensensor (295), der konfiguriert ist, Positionen jeder Ecke an einem vorderen Ende in der stromabwärtigen Richtung des zu dem Fach beförderten Blatts zu erfassen; und
    einen Controller (400), der konfiguriert ist, die Bewegung des ersten und des zweiten einstellbaren Trägers basierend auf dem erfassten Schräglaufwinkel und den erfassten Positionen jeder Ecke an dem vorderen Ende des zu dem Fach beförderten Blattes zu steuern bzw. zu regeln, so dass das Blatt ohne Stau zu dem Fach befördert wird;
    wobei der Eckensensor konfiguriert ist, sich um einen vorbestimmten Winkel in einer Ebene des Blattes zu drehen;
    wobei der Controller ferner konfiguriert ist zum:

    Steuern bzw. Regeln einer Drehung des Eckensensors basierend auf dem erfassten Schräglaufwinkel, so dass der Eckensensor parallel zu dem vorderen Ende des zu dem Fach beförderten Blatts ist, wenn der Eckensensor die Positionen jeder Ecke an dem vorderen Ende des zu dem Fach beförderten Blatts erfasst, und
    Bewegen des ersten einstellbaren Trägers zu einer Position X in der Richtung orthogonal zu der Förderrichtung des Blattes, die durch

    $$X = s \times \cos(A) - L \times \tan(A) - M$$

    gegeben ist, und
    wobei der Controller den zweiten einstellbaren Träger zu einer Position Y in der Richtung orthogonal zu der Förderrichtung des Blattes bewegt, die durch

    $$Y = t \times \cos(A) - L \times \tan(A) + M$$

    gegeben ist,
    wobei s die erfasste Position einer ersten Ecke des vorderen Endes des Blatts ist, t die erfasste Position einer zweiten Ecke des vorderen Endes des Blatts ist, A der erfasste Schräglaufwinkel ist, L eine im Voraus berechnete vorbestimmte Konstante zum Erweitern eines Intervalls zwischen dem ersten und dem zweiten einstellbaren Träger ist, wenn A groß wird, und M eine im Voraus berechnete vorbestimmte Konstante zum Beibehalten eines Spielraums bzw. Abstands zwischen den Ecken des vorderen Endes des Blattes und den entsprechenden einstellbaren Trägern ist.

2.  Blattverarbeitungssystem nach Anspruch 1, ferner umfassend:

    eine Stanzeinheit (90), die konfiguriert ist, ein Stanzen an einem Blatt auf einer stromaufwärtigen Seite des Fachs in der Blattförderrichtung durchzuführen, wobei
    der Schräglaufsensor und der Eckensensor in der Stanzeinheit positioniert sind.

3.  Blattverarbeitungssystem nach Anspruch 1 oder 2, ferner umfassend:

    eine Verarbeitungseinheit (200), die konfiguriert ist, eine Nachbearbeitung an einem oder mehreren Blättern durchzuführen; und
    ein Verarbeitungsfach (22), das konfiguriert ist, das eine oder die mehreren Blätter zu tragen, auf denen die Nachbearbeitung ausgebildet ist, wobei:
wenn eine Anzahl von Blättern, die einer Nachbearbeitungsanweisung entspricht, auf dem Fach gestapelt sind, der erste und der zweite einstellbare Träger von den auf dem Fach gestapelten Blättern in einer Richtung orthogonal zu den Förderrichtungen wegbewegt werden, so dass die Blätter zum Verarbeitungsfach bewegt werden, um die Nachbearbeitung gemäß der Nachbearbeitungsanweisung durchzuführen.

4.  Blattverarbeitungsverfahren, umfassend die Schritte:

Befördern eines Blatts auf einem Förderweg zu einem Fach (21), das konfiguriert ist, ein Blatt auf gegenüberliegenden Seiten des Blattes orthogonal zu einer Förderrichtung des Blattes zu stützen bzw. zu tragen, wobei das Fach einen ersten einstellbaren Träger (21a) und einen zweiten einstellbaren Träger (21b) enthält, der gegenüberliegend zu dem ersten einstellbaren Träger in der Richtung orthogonal zu der Förderrichtung des Blattes positioniert ist, wobei der erste und der zweite einstellbare Träger unabhängig voneinander bewegbar sind;
Erfassen eines Schräglaufwinkels des Blattes, das in Richtung des Fachs befördert wird;
Erfassen von Positionen jeder Ecke an einem vorderen Ende in der stromabwärtigen Richtung des Blattes, das in Richtung des Fachs befördert wird; und
Steuern bzw. Regeln der Bewegung des ersten und des zweiten einstellbaren Trägers in der Richtung orthogonal zu der Förderrichtung basierend auf dem erfassten Schräglaufwinkel und den erfassten Positionen jeder Ecke an dem vorderen Ende des Blatts, so dass das Blatt ohne Stau zu dem Fach befördert wird;
wobei die Positionen jeder Ecke an dem vorderen Ende des Blattes durch einen Eckensensor (295) erfasst werden, der konfiguriert ist, sich um einen vorbestimmten Winkel in einer Ebene des Blattes zu drehen;
wobei das Verfahren ferner den Schritt umfasst:

Drehen des Eckensensors basierend auf dem erfassten Schräglaufwinkel, so dass der Eckensensor parallel zu dem vorderen Ende des zu dem Fach beförderten Blatts ist, wenn der Eckensensor die Positionen jeder Ecke an dem vorderen Ende des zu dem Fach beförderten Blatts erfasst;
wobei der erste einstellbare Träger zu einer Position X in der Richtung orthogonal zu der Förderrichtung des Blattes bewegt wird, die durch

$$X = s \times \cos(A) - L \times \tan(A) - M$$

gegeben ist, und
der zweite einstellbare Träger zu einer Position Y in der Richtung orthogonal zu der Förderrichtung des Blattes bewegt wird, die durch

$$Y = t \times \cos(A) - L \times \tan(A) + M$$

gegeben ist,
wobei s die erfasste Position einer ersten Ecke des vorderen Endes des Blatts ist, t die erfasste Position einer zweiten Ecke des vorderen Endes des Blatts ist, A der erfasste Schräglaufwinkel ist, L eine im Voraus berechnete vorbestimmte Konstante zum Erweitern eines Intervalls zwischen dem ersten und dem zweiten einstellbaren Träger ist, wenn A groß wird, und M eine im Voraus berechnete vorbestimmte Konstante zum Beibehalten eines Spielraums bzw. Abstands zwischen den Ecken des vorderen Endes des Blattes und den entsprechenden einstellbaren Trägern ist.

5.  Blattverarbeitungsverfahren nach Anspruch 4, ferner umfassend den Schritt:

Stanzen des Blattes an einer stromaufwärtigen Seite des Fachs in der Blattförderrichtung mit einer Stanzeinheit (90), wobei
der Schräglaufsensor und der Eckensensor in der Stanzeinheit positioniert sind.

6.  Blattverarbeitungsverfahren nach Anspruch 4 oder 5, ferner umfassend die Schritte:

wenn eine Anzahl von Blättern, die einer Nachbearbeitungsanweisung entsprechen, auf dem Fach gestapelt ist, Bewegen des ersten und des zweiten einstellbaren Trägers weg von den auf dem Fach gestapelten Blättern in einer Richtung orthogonal zu den Förderrichtungen, so dass die Blätter zu einem Verarbeitungsfach (22) bewegt werden;

Stützen bzw. Tragen der Blätter auf dem Verarbeitungsfach; und

während die Blätter auf dem Verarbeitungsfach gestützt bzw. getragen werden, Durchführen einer Nachbearbeitung gemäß der Nachbearbeitungsanweisung auf den Blättern.

**Revendications**

1. Dispositif de traitement de feuille (200), comprenant :

   un plateau (21) configuré de manière à supporter une feuille sur des côtés opposés de la feuille de manière orthogonale à une direction de transport de la feuille, le plateau comportant un premier support réglable (21a) et un second support réglable (21b) positionné à l'opposé du premier support réglable dans la direction orthogonale à la direction de transport de la feuille, les premier et second supports réglables pouvant être déplacés indépendamment dans la direction orthogonale à la direction de transport ;

   un capteur d'inclinaison (296) configuré de manière à détecter un angle d'inclinaison de la feuille transportée sur le plateau ;

   un capteur de coin (295) configuré de manière à détecter des positions de chaque coin sur une extrémité avant, vers l'aval de la feuille transportée sur le plateau ; et

   une unité de commande (400) configurée de manière à commander le déplacement des premier et second supports réglables sur la base de l'angle d'inclinaison détecté et des positions détectées de chaque coin sur l'extrémité avant de la feuille transportée sur le plateau de telle sorte que la feuille est transportée sur le plateau sans bourrage ; dans lequel

   le capteur de coin est configuré de manière à tourner sur un angle prédéterminé dans un plan de la feuille ;

   l'unité de commande est, en outre, configurée de manière à :

   commander une rotation du capteur de coin sur la base de l'angle d'inclinaison détecté de telle sorte que le capteur de coin est parallèle à l'extrémité avant de la feuille transportée sur le plateau lorsque le capteur de coin détecte les positions de chaque coin sur l'extrémité avant de la feuille transportée sur le plateau, et déplacer le premier support réglable vers une position X, dans la direction orthogonale à la direction de transport de la feuille, donnée par

$$X = s \times \cos(A) - L \times \tan(A) - M,$$

   et

   l'unité de commande déplace le second support réglable vers une position Y, dans la direction orthogonale à la direction de transport de la feuille, donnée par

$$Y = t \times \cos(A) - L \times \tan(A) + M,$$

   où s représente la position détectée d'un premier coin de l'extrémité avant de la feuille, t représente la position détectée d'un second coin de l'extrémité avant de la feuille, A représente l'angle d'inclinaison détecté, L représente une constante prédéterminée calculée au préalable afin d'augmenter un intervalle entre les premier et second supports réglables lorsque A augmente et M représente une constante prédéterminée, calculée au préalable afin de maintenir une marge entre les coins de l'extrémité avant de la feuille et les supports réglables correspondants.

2. Dispositif de traitement de feuille selon la revendication 1, comprenant, en outre :

   une unité de poinçonnage (90) configurée de manière à exécuter un poinçonnage sur une feuille, au niveau d'un côté amont du plateau dans la direction de déplacement de feuille, dans lequel

   le capteur d'inclinaison et le capteur de coin sont positionnés sur l'unité de poinçonnage.

**3.** Dispositif de traitement de feuille selon la revendication 1 ou 2, comprenant, en outre :

une unité de traitement (200) configurée de manière à exécuter un post-traitement sur une ou plusieurs feuilles ; et

un plateau de traitement (22) configuré de manière à supporter la ou les feuilles sur lesquelles le post-traitement a été exécuté, dans lequel :

lorsqu'un certain nombre de feuilles correspondant à une instruction de post-traitement sont empilées sur le plateau, les premier et second supports réglables sont écartés des feuilles empilées sur le plateau dans la direction orthogonale aux directions de transport de telle sorte que les feuilles sont déplacées vers le plateau de traitement dans le but d'exécuter le post-traitement en fonction de l'instruction de post-traitement.

**4.** Procédé de traitement de feuille, comprenant les étapes de :

transport d'une feuille sur un trajet de transport vers un plateau (21) configuré de manière à supporter une feuille sur des côtés opposés de la feuille de manière orthogonale à une direction de transport de la feuille, le plateau comportant un premier support réglable (21a) et un second support réglable (21b) positionné à l'opposé du premier support réglable dans la direction orthogonale à la direction de transport de la feuille, les premier et second supports réglables pouvant être déplacés indépendamment ;

détection d'un angle d'inclinaison de la feuille transportée vers le plateau ;

détection des positions de chaque coin sur une extrémité avant, vers l'aval de la feuille transportée vers le plateau ; et

commande du mouvement des premier et second supports réglables dans la direction orthogonale à la direction de transport sur la base de l'angle d'inclinaison détecté et des positions détectées de chaque coin sur l'extrémité avant de la feuille de telle sorte que la feuille est transportée sur le plateau sans bourrage ;

dans lequel

les positions de chaque coin sur l'extrémité avant de la feuille sont détectées par un capteur de coin (295) configuré de manière à tourner sur un angle prédéterminé dans un plan de la feuille ;

le procédé comprend, en outre, l'étape de :

rotation du capteur de coin sur la base de l'angle d'inclinaison détecté de telle sorte que le capteur de coin est parallèle à l'extrémité avant de la feuille transportée sur le plateau lorsque le capteur de coin détecte les positions de chaque coin sur l'extrémité avant de la feuille transportée sur le plateau ;

dans lequel le premier support réglable est déplacé vers une position X, dans la direction orthogonale à la direction de transport de la feuille, donnée par

$$X = s \times \cos (A) - L \times \tan (A) - M,$$

et

le second support réglable est déplacé vers une position Y, dans la direction orthogonale à la direction de transport de la feuille, donnée par

$$Y = t \times \cos (A) - L \times \tan (A) + M,$$

où s représente la position détectée d'un premier coin de l'extrémité avant de la feuille, t représente la position détectée d'un second coin de l'extrémité avant de la feuille, A représente l'angle d'inclinaison détecté, L représente une constante prédéterminée calculée au préalable afin d'augmenter un intervalle entre les premier et second supports réglables lorsque A augmente et M représente une constante prédéterminée, calculée au préalable afin de maintenir une marge entre les coins de l'extrémité avant de la feuille et les supports réglables correspondants.

**5.** Procédé de traitement de feuille selon la revendication 4, comprenant, en outre, l'étape de :

poinçonnage de la feuille au niveau d'un côté amont du plateau dans la direction de transport de feuille avec une unité de poinçonnage (90), dans lequel

le capteur d'inclinaison et le capteur de coin sont positionnés sur l'unité de poinçonnage.

**6.** Procédé de traitement de feuille selon la revendication 4 ou 5, comprenant, en outre, les étapes de :

lorsqu'un certain nombre de feuilles correspondant à une instruction de post-traitement sont empilées sur le plateau, déplacement des premier et second supports réglables à l'écart des feuilles empilées sur le plateau dans la direction orthogonale aux directions de transport de sorte que les feuilles sont déplacées vers un plateau de traitement (22) ;
maintien des feuilles sur le plateau de traitement ; et
alors que les feuilles sont supportées sur le plateau de traitement, exécution d'un post-traitement en fonction de l'instruction de post-traitement sur les feuilles.

FIG.1

EP 3 352 021 B1

FIG.2

# FIG.3

**FIG.4**

# FIG.5

# FIG.6

# FIG.7

# FIG.8

# FIG.9

# FIG.10

FIG.11

# FIG.12

701

SECOND CONTROL
SECTION

201

FIRST CONTROL
SECTION

DETECT SKEW ANGLE A — ACT101

DETECT POSITIONS s AND t
OF BOTH ENDS — ACT102

ACT103:SKEW ANGLE A AND POSITIONS s AND t

ACT104

CALCULATE POSITIONS x
AND y

ACT105

SLIDE SUPPORT MEMBERS

**EP 3 352 021 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150183605 A
- US 20090243201 A
- US 20100007084 A
- US 20100007074 A